# EUROPÄISCHE PATENTSCHRIFT

(11) **EP 0 929 953 B1**
(45) Veröffentlichungstag und Bekanntmachung des Hinweises auf die Patenterteilung: **22.02.2006**
(21) Anmeldenummer: 97910231.6
(22) Anmeldetag: 30.09.1997
(51) Int. Cl.: H04H 1/00, G01S 1/02, H04Q 7/32

(54) **TELEMATIKGERÄT FÜR EIN KRAFTFAHRZEUG MIT AUTORADIO, ORTUNGSSYSTEM UND FUNKTELEFON**
TELEMATIC DEVICE FOR A MOTOR VEHICLE WITH CAR RADIO, POSITION FIXING SYSTEM AND RADIO TELEPHONE
DISPOSITIF TELEMATIQUE POUR UN VEHICULE A MOTEUR, COMPRENANT UN AUTORADIO, UN SYSTEME DE LOCALISATION ET UN RADIOTELEPHONE

(30) Priorität: 02.10.1996 DE 19640735
(43) Veröffentlichungstag der Anmeldung: 21.07.1999
(73) Patentinhaber: ROBERT BOSCH GMBH, 70442 Stuttgart (DE)
(72) Erfinder: BOCHMANN, Harald, D-30419 Hannover (DE); VAHLE, Andreas, D-31139 Hildesheim (DE); AUMAYER, Richard, D-31199 Diekholzen (DE)
(86) Internationale Anmeldenummer: PCT/DE1997/002238
(87) Internationale Veröffentlichungsnummer: WO 1998/015075

(56) Entgegenhaltungen:
- WO-A-94/15412
- DE-A- 4 322 288
- DE-C- 4 445 582
- US-A- 5 422 816

## Beschreibung

### Stand der Technik

Die Erfindung geht aus von einem Telematikgerät für ein Kraftfahrzeug nach der Gattung des Hauptanspruchs. Unter dem Begriff Telematik, insbesondere Verkehrstelematik versteht man solche Systeme, die zur Kommunikations-, Leit- und Informationstechnik im Verkehrsbereich Anwendung finden. Als ein solches Gerät kann auch das Bedien- und Anzeigegerät der DE-90 07 501 U1 bezeichnet werden. Bei diesem Gerät ist in das Gehäuse eines Autoradios zusätzlich ein Navigationsgerät eingebaut, wobei auf einer Anzeige Fahrtrichtungshinweise ausgegeben werden. An dieses Gerät ist an einer entsprechenden Übertragungsschnittstelle ein Funktelefon mit einer Wähltastatur angeschlossen, wobei das Funktelefon an anderer Stelle im Kraftfahrzeug angeordnet ist.

Bei der Vielzahl der heutzutage verwendeten Kommunikationsgeräte im Kraftfahrzeug stellt sich dabei das Problem, daß jedes Gerät für sich einen bestimmten Raum im Kraftfahrzeug beansprucht. Häufig werden dabei die einzelnen Geräte im Kofferraum des Kraftfahrzeugs eingebaut, so daß nicht mehr die volle Kapazität des Kofferraums zur Verfügung steht. Ein weiterer Nachteil wird auch darin gesehen, daß die einzelnen Geräte über entsprechende Stromversorgungsleitungen und Datenleitungen bzw. Informationsleitungen zu verbinden sind. Neben den vielfältig notwendigen Leitungen ist daher noch ein zusätzlicher und teilweise aufwendiger Montageaufwand erforderlich. Da des weiteren das Kraftfahrzeugnetz durch die verschiedenen Steuergeräte und Leistungsverbraucher sehr stark durch Störstrahlung überlagert ist, müssen für die einzelnen Kommunikationsgeräte zusätzlich aufwendige Entstörmaßnahmen vorgesehen werden. Auch ist ungünstig, daß jedes Gerät seine eigene Steuerlogik, Verstärker, Eingabetasten und Anzeigen usw. besitzt, so daß wegen fehlender Mehrfachausnutzung der einzelnen Komponenten kaum Synergieeffekte genutzt werden können.

### Vorteile der Erfindung

Das erfindungsgemäße Telematikgerät mit den kennzeichnenden Merkmalen des Hauptanspruchs hat demgegenüber den Vorteil, daß die einzelnen Kommunikationsgeräte in einem gemeinsamen Gehäuse untergebracht sind, wobei die Abmessungen dieses Gehäuses derart ausgelegt sind, daß es in einem vorgesehenen Schacht des Kraftfahrzeugs, beispielsweise im Autoradioschacht einbaubar ist. Dadurch ergibt sich vorteilhaft eine wesentlich geringere Verdrahtung, ein einfacher Einbau sowie wegen verringerter Störeinstrahlung ein sichererer Betrieb. Besonders vorteilhaft ist dabei, daß das Funktelefon mit einem GSM-Modul ausgerüstet ist, mit dem digitalisierte Daten, beispielsweise eine mit einem GPS-Modul berechnete Standortposition, ein gewünschter Zielort sowie Text an eine Zentrale übertragen werden kann. Die digitalisierte Übertragung ist dabei sehr störunempfindlich, da Rauschsignale und Interferenzen (Fading) weitgehend unterdrückt werden. Das Telematikgerät kann somit durch Informationsaustausch die vielfältigsten Informationen, beispielsweise bezüglich der Fahrtroute, der Verkehrssituation und der Fahrzeugsicherheit kontrollieren. Dabei kann es als Kompaktgerät relativ einfach und preiswert hergestellt werden.

Durch die in den abhängigen Ansprüchen aufgeführten Maßnahmen sind vorteilhafte Weiterbildungen und Verbesserungen des im Hauptanspruch angegebenen Telematikgerätes möglich. Besonders vorteilhaft ist, daß die externe Zentrale die Berechnung einer Zielroute zu einem gewünschten Ziel durchführt und diese an das Fahrzeuggerät übersendet. Die einzelnen Komponenten, beispielsweise ein CD-ROM-Laufwerk mit einer digitalisierten Karte sowie ein aufwendiges Rechenprogramm müssen nicht in das Telematikgerät des Fahrzeugs eingebaut werden. Vorteilhaft ist weiterhin, daß das Telematikgerät lediglich einen relativ kleinen Speicher benötigt, um die von der Zentrale gesandte Zielroute zu speichern und auf eine entsprechende Anzeige des Telematikgerätes auszugeben.

Da das Telematikgerät die augenblickliche Fahrzeugposition ermittelt, kann für ein beschränktes, vorgegebenes Teilgebiet vorzugsweise entlang der Fahrtroute festgelegt werden und für dieses Gebiet die Verkehrssituation selektiv erfaßt werden. Aufgrund der vorliegenden Daten für dieses Teilgebiet wird in Abhängigkeit von der Verkehrssituation eine Alternativzielroute angefordert, so daß das Fahrzeug möglichst ungehindert in Zielrichtung fahren kann.

Günstig ist auch, daß mittels des GSM-Moduls von der Zentrale weitere Informationen an das Fahrzeuggerät gesendet werden, so daß gewünschte Ziele wie Hotels, Tankstellen, Parkplatz, Bank usw. leicht aufgefunden werden können.

Darüberhinaus kann das Telematikgerät zur Prävention gegen Diebstahl oder mißbräuchliche Benutzung des Fahrzeugs vorteilhaft verwendet werden, da das Telematikgerät die Benutzung des Fahrzeugs nur dann freigibt, wenn eine ausreichende Identifikation vorliegt. Andererseits wird bei mißbräuchlicher Benutzung automatisch eine Notmeldung an die Zentrale abgesetzt, so daß im Falle eines Diebstahls der Fahrzeughalter oder die Polizei direkt verständigt werden können.

Um das Fahrzeug leichter aufspüren zu können, kann wegen der stets bekannten Fahrzeugposition eine Freigabe für ein beschränktes Fahrgebiet oder ein direkter Eingriff in das Motormanagement durchgeführt werden. Ein Weiterfahren oder eine Flucht mit dem Fahrzeug wird dadurch erschwert.

Besonders günstig ist weiterhin, daß mit dem Telematikgerät im Falle eines Unfalls oder einer Fahrzeugpanne ein Notruf an die Zentrale abgesetzt werden, so daß sehr schnell Hilfe angefordert werden kann.

Eine vorteilhafte Lösung wird auch darin gesehen, daß mit dem Telematikgerät nicht nur ein Parkplatz reserviert werden kann, sondern auch die fälligen Gebühren mittels einer Guthabenkarte, beispielsweise einer Chipkarte oder ähnliches automatisch abbuchbar sind, so daß der Fahrer beim Verlassen des Parkplatzes für die Bezahlung nicht zusätzlich anhalten muß.

Das Telematikgerät kann vorteilhaft durch weitere Geräte, beispielsweise mit einem CD-ROM-Laufwerk ausgestattet sein, in dem eine digitale Straßenkarte abgelegt ist. Bei Überlastung der Zentrale, insbesondere in Ballungsgebieten, kann das Telematikgerät mit Hilfe der digitalen Straßenkarte seine Fahrtroute selbst berechnen und ist somit von den Routenvorschlag der Zentrale unabhängig.

### Zeichnung

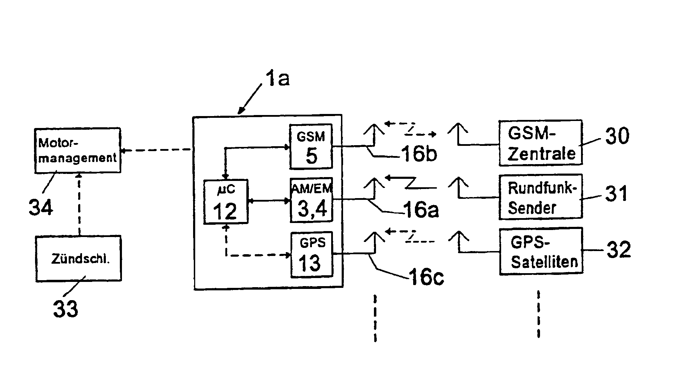

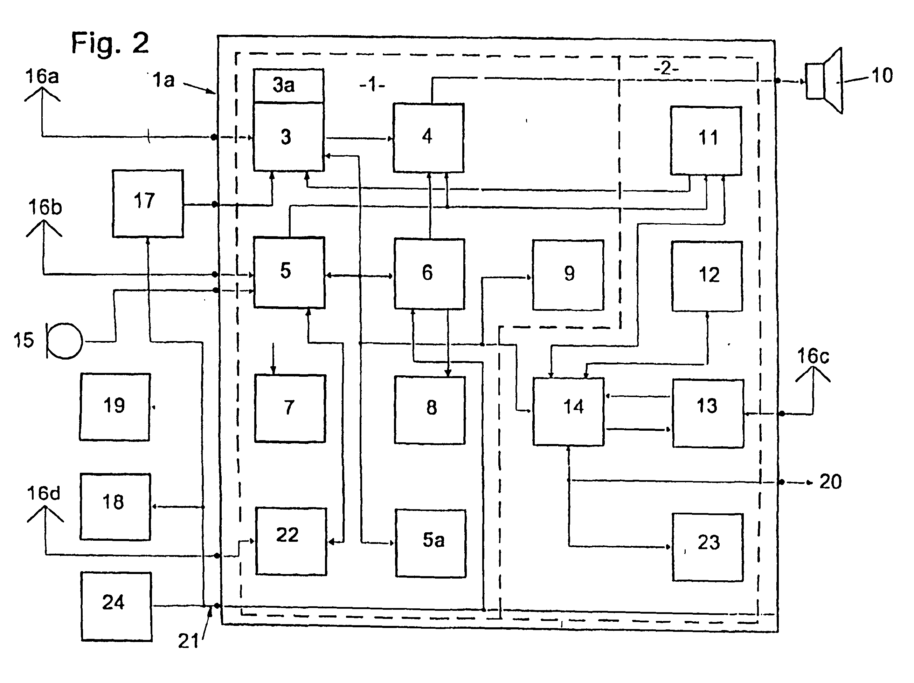

Ein Ausführungsbeispiel der Erfindung ist in der Zeichnung dargestellt und in der Beschreibung näher erläutert. Es zeigen Figur 1 den Systemaufbau als Blockschaltbild und Figur 2 zeigt ein Blockschaltbild des Telematikgerätes.

### Beschreibung des Ausführungsbeispiels

Figur 1 zeigt den Systemaufbau der erfindungsgemäßen Schaltungsanordnung. Ein Telematikgerät 1 ist vorzugsweise mit einem Autoradio 3, 4, einem GSM-Modul (Global System Mobilication) 5 für Funkdienste und einem GPS-Modul 13 zum Empfang von GPS-Satelliten (Global Positioning System) ausgebildet. Diese einzelnen Geräte haben Empfangs- bzw. Sendeantennen 16a, b, c, mit entsprechenden Eingängen. Die Geräte werden zentral von einem Telematikrechner 12 gesteuert. Die einzelnen Module des Telematikgerätes sind derart ausgebildet, daß sie die einzelnen Signale einer GSM-Zentrale 30, Rundfunksender 31 und GPS-Satelliten 32 empfangen. Desweiteren ist vorgesehen, an das Telematikgerät Interfaceanschlüsse für wenigstens einen CAN- und/oder einen weiteren Datenbus vorzusehen, an den beispielsweise das Motormanagement 34 und/oder das Zündschloß 33 des Kraftfahrzeuges angekoppelt sind. Das Telematikgerät kann somit auch Einfluß ausüben auf das Motormanagement 34 in Abhängigkeit von der Stellung des Zündschlosses 33.

Figur 2 zeigt ein Blockschaltbild für das Telematikgerät. In ein Gehäuse la sind im wesentlichen die nachfolgend beschriebenen Module eingebaut. Das Gehäuse la ist in seinen Dimensionierungen derart bemessen, daß es vorzugsweise in den genormten Schacht am Armaturenbrett des Kraftfahrzeugs einbaubar ist, der für den Einbau eines Autoradios vorgesehen ist. Erfindungsgemäß ist daher vorgesehen, die einzelnen Module derart kompakt und raumsparend zu erstellen, damit sie in das Gehäuse la funktionsgerecht einbaubar sind. Der Einbauschacht kann dabei die einfache oder doppelte Normgröße aufweisen.

Das Gehäuse 1a enthält im wesentlichen eine Radio-Funkeinheit 1 und eine Telematikeinheit 2. Die Radio-Funkeinheit 1 weist im wesentlichen ein Autoradio mit einem Empfangsteil 3 und einem Verstärker 4 auf. An das Empfangsteil ist ein RDS-Modul 3a (Radio-Data-System) angegliedert. Das Empfangsteil 3 ist über eine entsprechende Leitung steckbar mit einer Radioantenne 16a verbunden. Am Ausgang des Verstärkers 4 sind einer oder mehrere Lautsprecher 10 anschließbar. Der Lautsprecher 10 ist zeitweise als Mikrofon umschaltbar, so daß beispielsweise im Funkbetrieb der Lautsprecher 10 als Mikrofon verwendbar ist, das Mikrofon 15 entfällt dann. Für den Funkbetrieb mit einer externen Zentrale 30 ist ein GSM-Modul 5 vorgesehen, an das eine entsprechende Sende/Empfangsantenne 16b anschließbar ist. Desweiteren ist an das GSM-Modul 5 als Eingabevorrichtung ein Mikrofon 15 angeschlossen. Aucch ist das GSM-Modul 5 mit einem Kartenleser 7 verbunden, der eine Speicherkarte, beispielsweise eine Chipkarte, SIM-Keycard (Subscriber Identity Module), eine Guthabenkarte oder dergleichen lesen kann. Ergänzend ist ein DAB-Modul 22 (Digital Audio Broadcasting) mit dem GSM-Modul 5 verbunden. An das DAB-Modul 22 ist eine DAB-Antenne 16d anschließbar. Zur Steuerung einzelner Baugruppen ist eine Steuerung 6 sowie Einspannungsregler 8 und ein MMI-Modul (Man Mashine Interface) 9 vorgesehen. Mit der Steuerung ist weiterhin eine optische Anzeige 5a verbunden, auf der eingegebene und empfangene Informationen darstellbar sind.

Die Telematikeinheit 2 weist eine Spracheinheit 11 auf, in der für eine bestimmte Landessprache vorgefertigte Wort- und Satzteile gespeichert sind. Des weiteren ist vorgesehen, die Spracheinheit 11 für weitere Wort- und Satzteile auszubilden. Die Spracheinheit 11 ist mit einem Interface-Controller 14 verbunden, der aus dem empfangenen RDS- oder GSM-Signalen die Wort- und Satzteile zusammensetzt, so daß sie über den Verstärker 4 und den Lautsprecher 10 akustisch ausgebbar sind. An den Interface-Controller 14 ist desweiteren ein Telematikrechner 12 und ein Satelliten-Modul 13, vorzugsweise ein GPS-Modul, angeschlossen. Das GPS-Modul 13 ist mit einer GPS-Antennte 16c verbunden. Der Interface-Controller 14 ist über einen internen Bus mit der Steuerung 6, dem GSM-Modul 5, dem MMI-Modul 9, dem Empfangsteil 3 und der optischen Anzeige 5a verbunden. Die Spracheinheit 11 ist ebenfalls mit dem Empfangsteil 3 verbunden. Der Interface-Controller 14 ist mit einem CAN-Bus 20 (Computer Area Network) ausgebildet, an den ein Ortungs- und Navigationssystem 23 anschließbar ist. Das Ortungs- und Navigationssystem 23 hat vorzugsweise einen Speicher für eine digitale Straßenkarte. Weiterhin ist ein weiterer Datenbus 21, beispielsweise einen ASCII-Bus vorgesehen, der mit der Steuerung 6 verbunden ist. Sowohl der CAN-Bus 20 als auch der weitere Datenbus 21 haben am Gehäuse 1a entsprechend ausgeführte Buchsen, so daß weitere Geräte anschließbar sind.

An den weiteren Datenbus 21 ist beispielsweise ein CD-ROM-Laufwerk 17, vorzugsweise ein CD-Changer, eine Eingabevorrichtung 19 mit wenigstens einer Taste, eine Hör-/Sprecheinheit 18 und ein Spracherkennungsmodul 24 angeschlossen. Diese weiteren Baugruppen werden an geeignete Stellen im Kraftfahrzeug angeordnet. So kann beispielsweise der CD-Changer 17 im doppelten Normschacht oberhalb des Telematikgerätes angeordnet sein. Es ist vorgesehen, die Eingabevorrichtung 19 auf der Frontseite des Telematikgerätes anzuordnen. Alternativ ist vorgesehen, die Eingabevorrichtung 19 mobil im Fahrzeug anzuordnen, wobei zwischen der Eingabevorrichtung 19 und dem Telematikgerät die Datenübertragung mittels Kabel oder drahtlos erfolgt. Entsprechend ist eine Anordnung der Hör-/Sprecheinheit 18 bzw. des Spracherkennungsmoduls 24 vorgesehen.

Im folgenden wird die Funktionsweise des Telematikgerätes durch Beschreibung der einzelnen Baugruppen und ihrer Funktionen näher erläutert. Das Telematikgerät ist kompakt aufgebaut und erfüllt alle Funktionen, die von den einzelnen bekannten Geräten, wie Rundfunkgerät, Autotelefon, Navigationsgerät und Notrufgerät bekannt sind. Durch den kompakten Aufbau und Mehrfachnutzung von gleichen Baugruppen wird vorteilhaft ein Synergieeffekt erreicht, der eine kompakte Bauweise und einen einfachen Einbau in das Kraftfahrzeug ermöglicht.

Das Autoradio 3, 4 ist für den Empfang von UKW, MW, LW und KW vorgesehen und beinhaltet die RDS-Funktionen in Verbindung mit dem TMC-Kanal (Traffic-Message-Channel). An dem Ausgang des Verstärkers 4 sind beispielsweise 4 Kanäle mit Lautsprechern 10 anschließbar. Desweiteren sind Bedienelemente oder ein Cursor für die Einstellung aller übrigen Funktionen vorgesehen. Als CD-ROM 17 ist vorzugsweise ein zehnfach CD-Changer vorgesehen, der an einen entsprechenden Eingang zum Autoradio 3, 4 geschaltet ist.

Das Funktelefon enthält ein GSM-Modul 5, wobei die Aktivierung vorzugsweise mittels SIM-Karten erfolgt. Der Kartenleser 7 ist derart ausgebildet, daß eine größere Anzahl von SIM-Kartenbenutzern das Gerät bedienen können. Es ist vorgesehen, daß entweder ab Werk ein vorgegebener Code fest eingestellt wird oder daß sich der Code automatisch bei Benutzung der ersten SIM-Karte (Subscriber Identity Module) anstelle einer SIM-Karte oder Schlüsselschaltung verwendet werden. Ein Notruf ist jederzeit über das GSM-Modul an die Zentrale 30 absetzbar, auf der optischen Anzeige 5a erfolgt ein entsprechender Hinweis. Vorteilhaft ist desweiteren eine Freisprecheinrichtung, bei der die Rufton- und die Hörerlautstärke einstellbar ist. Eine eintreffende kurze Nachricht (SMS, Short Message Service) wird mittels eines Signaltons angekündigt und auf der optischen Anzeige 5a ausgegeben. Desweiteren erfolgt beim Einleiten eines Telefongespräches eine Stummschaltung des Autoradios und nach Beendigung des Gespräches wird das Autoradio oder auch eine gerade laufende Audio-CD sanft auf die vorherige Lautstärke eingestellt. Die SIM-Karte enthält genügend Speicherplätze für eine ausreichende Anzahl von Wähladressen. Beim Einschieben der SIM-Karte in den Kartenleser 7 wird der Kurzwahlspeicher ausgelesen und die Namen alphanumerisch sortiert auf der optischen Anzeige 5a ausgegeben. Desweiteren ist eine automatische Gesprächsannahme oder durch Druck auf eine beliebige Taste vorgesehen. Darüberhinaus sind alle Funktionen inklusive der Anzeige der Gesprächsgebühren vorgesehen, wie sie auch bei einem Komforttelefon gegeben sind. Darüberhinaus ist vorgesehen, daß in Datennetzen eine Mailbox oder dergleichen angewählt werden kann.

Das Telematikgerät bietet gegenüberber einer bekannten Wegfahrsperre den Vorteil, daß ein gestohlenes Fahrzeug automatisch seine aktuelle Position an die Zentrale 30 sendet, wobei die Position mittels des Satellitenmoduls 13 (GPS-Modul) erfaßt wird. Bei unberechtigter Benutzung des Fahrzeuges wird automatisch die Diebstahlsfunktion ausgelöst und ein Alarm an die Zentrale 30 gesendet. Ein Diebstahl wird dadurch erkannt, daß das Fahrzeug ein vom Fahrer definiertes Fahrgebiet verläßt. Nach Verlassen dieses Gebietes erfolgt ein Eingriff in das Motormanagement, so daß das Fahrzeug nur noch beschränkt bewegungsfähig oder fahruntüchtig wird. Zum Schutz gegen Manipulationen kann die Freifahrzone auch bei der Zentrale 30 gespeichert sein. Empfängt die Zentrale 30 eine Fahrzeugposition, die außerhalb der Freifahrzone liegt, dann wird automatisch ein Diebstahlsalarm ausgelöst. Desweiteren ist vorgesehen, daß das Fahrzeug nur dann voll funktionstüchtig ist, wenn das Diebstahlsschutzsystem betriebsbereit ist und nicht durch irgendwelche Manipulationen an der Sendeantenne oder dergleichen gestört wurde. Dieses wird mittels des GSM-Moduls 5 überwacht. Liegt eine Störung oder Unterbrechung der GSM-Verbindung vor, dann führt dies zur Blockierung oder zur Fahrteinschränkung des Fahrzeuges. Durch Identifizierungssignale des rechtmäßigen Besitzers oder legitimierten Fahrers kann die Beschränkung aufgehoben werden.

Um Manipulationen der ermittelten GPS-Position vorzubeugen, kann die Fahrzeugposition durch Mitkopplung über Radsensoren oder Auswertung der Tacho-Impulse kontrolliert werden.

In weiterer Ausgestaltung der Erfindung ist vorgesehen, bei ungünstigen Sende-/Empfangsbedingungen des Funktelefons eine bestimmte Wartezeit oder einen Toleranzweg vorzugeben. Bewegt sich das Fahrzeug innerhalb dieser vorgegebenen Grenzen, so wird die Fahrfunktion auch dann nicht eingeschränkt, wenn beispielsweise keine Satellitensignale zu empfangen sind.

Als weiterer Telematikdienst ist ein Pannenruf vorgesehen. Im Falle einer Autopanne oder eines Unfalls folgt mittels des GSM-Moduls 5 eine Kommunikation mit der Zentrale 30, wobei der Pannenruf an einen Pannendienst weitergeleitet wird. Mit dem Pannenruf wird auch die Fahrzeugposition übertragen, die mittels des GPS-Moduls 13 oder des Ortungs- und Navigationssystems 23 bekannt ist. Durch Verbindung mit dem Motormanagement über den weiteren Datenbus 21 oder den CAN-Bus 20 kann beispielsweise ein Motorfehler direkt an den Pannendienst gesendet werden, so daß gegebenenfalls eine Ferndiagnose gestellt werden kann. Es ist vorgesehen, eine reine Datenverbindung zum Pannendienst durchzuführen, da dieser Dienst einen günstigeren Tarif anbietet. Alternativ ist auch eine kombinierte Sprech-/Datenverbindung denkbar. Der Pannendienst kann per Knopfdruck oder durch Eingabe einer Identifikationsnummer auf einer Pannenruf-Chipkarte erfolgen. Mit dem Pannenruf werden fahrzeugspezifische Daten (Typ, KFZ-Kennzeichen, Fahrerdaten), die Fahrzeugposition und die Uhrzeit übertragen. Die Rückmeldung des Pannendienstes erfolgt über ein optisches und/oder akustisches Signal und kann auf der optischen Anzeige 5a oder über den Lautsprecher 10 ausgegeben werden. Ein Notfallruf erfolgt in ähnlicher Weise. Es können jedoch zusätzliche Informationen über die Anzahl der am Unfall beteiligten Personen, über deren Verletzungen, Gefahrguthinweise oder sonstige gefährliche Situationen, übertragen werden.

Als weiterer Telematikdienst ist ein Navigationsassistent vorgesehen. Der Navigationsassistent unterstützt den Fahrer bei der Zielsuche und Routenberechnung. Dabei wird der Aufwand im Telematikgerät auf ein Minimum reduziert, da die Routenberechnung und die Zielführung durch die Zentrale erfolgt und diese eine oder mehrere geeignete Routen an das Fahrzeuggerät überträgt. Da die Zentrale 30 ebenfalls die aktuelle Verkehrssituation im Fahrgebiet entlang der Zielroute aufgrund der empfangenen RDS-TMC-Informationen kennt, kann die Zentrale 30 eine geeignete Zielroute berechnen und an das Telematikgerät im Fahrzeug senden. Auch in diesem Fall wird für den Verbindungsaufbau das GSM-Modul 5 benötigt. Um ein bestimmtes Ziel zu erreichen, gibt der Fahrer des Fahrzeugs beispielsweise mittels einer Tastatur der Eingabevorrichtung 19 oder der Hör-/Sprecheinheit 18 seinen Zielwunsch ein. Der Zielwunsch kann alternativ mit einem Spracherkennungsmodul 24 dekodiert werden und über das GSM-Modul 5 an die Zentrale 30 gesendet werden. Die Übertragung erfolgt dann im preiswerteren Datenkanal. Nach Berechnung der Zielroute sendet die Zentrale 30 entweder einen entsprechenden Ausschnitt eines Straßenplanes und/oder Fahrthinweise an das Telematikgerät zurück. Da ein DAB-Modul 22 vorgesehen ist, ist eine ausreichende Bandbreite auch zur störungsfreien Übertragung von Bildern möglich. Das DAB-Modul ist per se bekannt und muß daher nicht näher erläutert werden.

Da das Telematikgerät ein GPS-Modul 13, oder für eine genauere Ortsbestimmung ein DGPS-Modul (Differential Global Positioning System) aufweist, genügt es, wenn die Zentrale 30 einzelne Stützpunkte für die berechnete Route überträgt. Aufgrund der bekannten Fahrzeugposition berechnet dann das Telematikgerät die Entfernung und die Richtung zum nächsten Stützpunkt der Route und so schrittweise weiter, bis das gewünschte Ziel erreicht ist. Vorteilhaft wird die Entfernung und Richtung zum nächsten Stützpunkt und zum Ziel auf der optischen Anzeige 5a ausgegeben. Ergänzend ist vorgesehen, diese Information mittels der Spracheinheit 11 akustisch über den Lautsprecher 10 auszugeben. Liegen mehrere Stützpunkte innerhalb des Toleranzbereiches der GPS-Ortung vor, so werden sämtliche Routenempfehlungen zu diesen Stützpunkten der Reihe nach ausgegeben. Abweichungen von der Route werden signalisiert und die Richtung und Entfernung zur Route bzw. zum nächsten Stützpunkt zusätzlich angezeigt. Bei einer Veränderung der aktuellen Verkehrslage wird automatisch eine Neuberechnung der Route unter Berücksichtigung der momentanen Position von der Zentrale 30 durchgeführt und an das Telematikgerät gesendet.

Für die Routenberechnung kann das Telematikgerät sehr preiswert ausgeführt sein, ein umfangreicher Zwischenspeicher für die Route entfällt. Die GSM-Verbindung wird nur zeitweise für die Übertragung der Zielangaben sowie für die Übertragung der berechneten Fahrtroute an das Telematikgerät benötigt. Durch Auswertung der RDS/TMC-Daten kann das Telematikgerät selbsttätig unter Umgehung eines aktuellen Staus die Fahrtroute auswählen.

Unter bestimmten Bedingungen (Datenschutz, Speichervolumen, Kosten), kann es notwendig sein, daß nicht sämtliche Routen in einem Empfangsgebiet von der Zentrale 30 gespeichert werden. Das Telematikgerät ist für diesen Fall mit einem Ortungs- und Navigationssystem 23 ausgerüstet und enthält ein CD-ROM für eine digitale Karte. Als CD-ROM kann der CD-Changer 17 verwendet werden. Mittels Wegsensoren, z. B. Radsensoren, einem Richtungssensor und/oder dem GPS-Modul 13 wird die Fahrzeugposition mitgekoppelt und auf einer digitalen Karte auf der optischen Anzeige 5a ausgegeben. Die aktuelle Position wird über das GSM-Modul 5 an die Zentrale 30 gesendet, so daß diese die Fahrtroute unter Berücksichtigung der aktuellen Verkehrssituation berechnen kann. Die Zentrale 30 sendet dann die berechnete Fahrtroute an das Telematikgerät, so daß es auf der digitalen Karte der optischen Anzeige 5a angezeigt werden kann. Besitzt das Fahrzeug bereits ein autarkes Ortungs- und Navigationsgerät, so ist in weiterer Ausgestaltung der Erfindung vorgesehen, daß das Ortungs- und Navigationssystem unter Berücksichtigung der aktuellen Verkehrssituation, die mittels des RDS-TMC-Kanals selektiv empfangen werden, eine optimale Route zu berechnen.

Wird als Zielwunsch beispielsweise ein Parkplatzwunsch für den Zielort eingegeben, dann kann der zuvor beschriebene Navigationsassistent die Zielführung zum Parkplatz oder einem ähnlichen Ziel (Werkstatt, Tankstelle, Bank, Supermarkt etc.) übernehmen. Mit Hilfe des GSM-Moduls 5 ist auch eine Reservierung eines Parkplatzes möglich. Eine automatische Parkgebührenabbuchung wird mittels des Kartenlesers 7 durchgeführt. Da die aktuelle Verkehrssituation im Autoradio 3, 4 gespeichert ist, kann diese über die TIM-Funktion (Traffic Information Message) aktiviert werden und akustisch oder optisch ausgegeben werden.

In weiterer Ausgestaltung der Erfindung ist vorgesehen, mit Hilfe des GSM-Moduls 5 allgemeine Informationen zu empfangen und auszuwerten. Beispielsweise können Touristikinformationen, Hotels, Tankstellen, Parkplätze etc. selektiv für den Zielort oder das Zielgebiet von der Zentrale abgerufen werden. Mittels eines geeigneten Menüs wird aus der Darstellung der optischen Anzeige 5a beispielsweise ein Hotel ausgewählt und mittels des GSM-Moduls 5 auf Knopfdruck eine Reservierung durchgeführt werden.

Abschließend wird noch darauf hingewiesen, daß der Aufbau der einzelnen Module per se bekannt ist und daher nicht näher beschrieben werden muß.

## Patentansprüche

1. Telematikgerät für ein Kraftfahrzeug, mit einem Autoradio, in das ein Ortungssystem eingebaut ist, mit einem Funktelefon, mit einem Speicher und mit einer Anzeige, **dadurch gekennzeichnet, daß** das Autoradio (3, 4) ein RDS-Modul (3a) aufweist, daß das Ortungssystem ein Satelliten-Empfangsmodul, vorzugsweise ein GPS-Modul (13) aufweist, daß das Funktelefon ein Modul für digitale Funkdienste, vorzugsweise ein GSM-Modul (5) aufweist, daß das RDS-Modul (3a), das GPS-Modul (13) und das GSM-Modul (5) zusammen mit einer Spracheinheit (11) und dem Autoradio (3, 4) in einem Gehäuse (1a) des Telematikgerätes eingebaut sind, wobei das Gehäuse (1a) derart ausgebildet ist, daß es in einem genormten Aufnahmeschacht des Kraftfahrzeugs einbaubar ist, und daß das Gehäuse (1a) wenigstens Antennenanschlüsse (16a, b, c) für das Autoradio (3, 4), das GSM-Modul (5) und das GPS-Modul (13) sowie Interfaceanschlüsse für wenigstens einen CAN- (20) und/oder einen weiteren Datenbus (21) und für wenigstens einen Lautsprecher (10) und/oder ein Mikrophon (15) aufweist.

2. Telematikgerät nach Anspruch 1, **dadurch gekennzeichnet, daß** das Telematikgerät eine Eingabevorrichtung (15, 19) für einen Zielort aufweist und derart ausgebildet ist, daß die vom Navigationssystem ermittelte Fahrzeugposition und der eingegebene Zielort mittels des GSM-Moduls (5) zur Berechnung einer Zielroute an eine Zentrale (30) gesendet wird.

3. Telematikgerät nach Anspruch 1 oder 2, **dadurch gekennzeichnet, daß** das Telematikgerät einen Speicher (5a) aufweist, in dem eine von der Zentrale (30) unter Berücksichtigung der aktuellen Verkehrssituation berechnete und an das Telematikgerät gesendete Zielroute speicherbar ist.

4. Telematikgerät nach einem der vorherigen Ansprüche, **dadurch gekennzeichnet, daß** das Telematikgerät ausgebildet ist, mittels der ermittelten Fahrzeugposition und der Fahrtrichtung zum eingegebenen Zielort die über das GSM-Modul (5) oder das RDS-Modul (3a) empfangenen Informationen über die momentane Verkehrssituation für ein vorgegebenes Teilgebiet zu selektieren und optisch und/oder akustisch auszugeben.

5. Telematikgerät nach einem der vorherigen Ansprüche, **dadurch gekennzeichnet, daß** das Telematikgerät ausgebildet ist, mittels des GSM-Moduls (5) von der Zentrale (30) allgemeine Informationen, beispielsweise über Hotels, Tankstellen, Parkplätze, Banken usw. abzufragen.

6. Telematikgerät nach einem der vorherigen Ansprüche, **dadurch gekennzeichnet, daß** das Telematikgerät einen Kartenleser (7) zur Identifikation aufweist und ausgebildet ist, mittels des GSM-Moduls (5) eine unberechtigte Benutzung des Kraftfahrzeugs an die Zentrale (30) zu melden.

7. Telematikgerät nach Anspruch 6, **dadurch gekennzeichnet, daß** ausgehend von der Fahrzeugposition zu einem bestimmten Zeitpunkt das Telematikgerät nach Überschreiten eines vorgegebenen Fahrgebietes eine Meldung an die Zentrale (30) abgibt.

8. Telematikgerät nach Anspruch 6 oder 7, **dadurch gekennzeichnet, daß** das Telematikgerät einen Eingriff in das Motormanagement (34) des Kraftfahrzeugs durchführt.

9. Telematikgerät nach einem der vorherigen Ansprüche, **dadurch gekennzeichnet, daß** das Telematikgerät ein Schreib-/Lesegerät für eine Guthabenkarte, beispielsweise eine Chipkarte aufweist und derart ausgebildet ist, daß die Zentrale (30) auf Anforderung des Fahrers automatisch fällige Parkplatzgebühren von der Guthabenkarte oder dergleichen abbucht.

10. Telematikgerät nach einem der vorhergehenden Ansprüche, **dadurch gekennzeichnet, daß** das Telematikgerät einen Speicher für eine digitale Karte und/oder einen Wegsensor aufweist.

11. Telematikgerät nach einem der vorhergehenden Ansprüche, **gekennzeichnet durch** ein DAB-Modul (22).

12. Telematikgerät nach einem der vorhergehenden Ansprüche, **gekennzeichnet durch** ein Navigationsmodul (23), das an den CAN-Bus (20) oder den weiteren Daten-Bus (21) anschließbar ist.

13. Telematikgerät nach einem der vorherigen Ansprüche, **dadurch gekennzeichnet, daß** der wenigstens eine Lautsprecher (10) zeitweise als Mikrofon verwendbar ist.

## Claims

1. Telematics appliance for a motor vehicle, having a car radio with an installed position-finding system, having a radio telephone, having a memory and having a display, **characterized in that** the car radio (3, 4) has an RDS module (3a), **in that** the position-finding system has a satellite reception module, preferably a GPS module (13), **in that** the radio telephone has a module for digital radio services, preferably a GSM module (5), **in that** the RDS module (3a), the GPS module (13) and the GSM module (5) together with a voice unit (11) and the car radio (3, 4) are installed in a housing (1a) of the telematics appliance, the housing (1a) being in a form such that it can be installed in a standardized holding slot in the motor vehicle, and **in that** the housing (1a) has at least antenna connections (16a, b, c) for the car radio (3, 4), the GSM module (5) and the GPS module (13) and also interface connections for at least one CAN (20) and/or a further data bus (21) and for at least one loudspeaker (10) and/or a microphone (15).

2. Telematics appliance according to Claim 1, **characterized in that** the telematics appliance has an input apparatus (15, 19) for a destination and is in a form such that the vehicle position ascertained by the navigation system and the input destination are sent to a control centre (30) by means of the GSM module (5) in order to calculate a destination route.

3. Telematics appliance according to Claim 1 or 2, **characterized in that** the telematics appliance has a memory (5a) which can store a destination route which is calculated by the control centre (30) taking into account the present traffic situation and which is sent to the telematics appliance.

4. Telematics appliance according to one of the preceding claims, **characterized in that** the telematics appliance is designed to use the ascertained vehicle position and the direction of travel to the input destination in order to select the information received via the GSM module (5) or the RDS module (3a) about the present traffic situation for a prescribed subregion and to output said information visually and/or audibly.

5. Telematics appliance according to one of the preceding claims, **characterized in that** the telematics appliance is designed to use the GSM module (5) to ask the control centre (30) for general information, for example about hotels, filling stations, car parks, banks, etc.

6. Telematics appliance according to one of the preceding claims, **characterized in that** the telematics appliance has a card reader (7) for identification and is designed to use the GSM module (5) to report unauthorized use of the motor vehicle to the control centre (30).

7. Telematics appliance according to Claim 6, **characterized in that** starting from the vehicle position at a particular time the telematics appliance sends a message to the control centre (30) after a prescribed region of travel is exceeded.

8. Telematics appliance according to Claim 6 or 7, **characterized in that** the telematics appliance intervenes in the engine management (34) of the motor vehicle.

9. Telematics appliance according to one of the preceding claims, **characterized in that** the telematics appliance has a read/write appliance for a prepaid card, for example a chip card, and is designed such that the control centre (30) automatically debits car park charges which are due from the prepaid card or the like upon a request by the driver.

10. Telematics appliance according to one of the preceding claims, **characterized in that** the telematics appliance has a memory for a digital map and/or a position sensor.

11. Telematics appliance according to one of the preceding claims, **characterized by** a DAB module (22).

12. Telematics appliance according to one of the preceding claims, **characterized by** a navigation module (23) which can be connected to the CAN bus (20) or to the further data bus (21).

13. Telematics appliance according to one of the preceding claims, **characterized in that** the at least one loudspeaker (10) can be intermittently used as a microphone.

## Revendications

1. Appareil de télématique pour un véhicule automobile comportant un autoradio intégrant un système de localisation, un radiotéléphone avec une mémoire et un affcheur,
**caractérisé en ce que**
l'autoradio (3, 4) comporte un module RDS (3a), le système de localisation comporte un module de réception satellitaire, de préférence un module GPS (13), le radiotéléphone comprend un module pour les services de radio numériques, de préférence un module GSM (5), le module RDS (3a), le module GPS (13) et le module GSM (5) étant installés avec une unité vocale (11) et l'autoradio (3, 4) dans un boîtier (1a) de l'appareil de télématique,
le boîtier (1a) est réalisé pour se monter dans une cavité de réception normalisée du véhicule, et
le boîtier (1a) comporte au moins un branchement d'antenne (16a, b, c) pour l'autoradio (3a), le module GSM (5) et le module GPS (13) ainsi que des branchements d'interfaces pour au moins un bus CAN (20) et/ou un autre bus de données (21) et pour au moins un haut-parleur (10) et/ou un micro (15).

2. Appareil de télématique pour un véhicule automobile selon la revendication 1,
**caractérisé en ce qu'**
il comporte un dispositif d'entrée (15, 19) pour une destination et est réalisé pour que la position du véhicule fournie par le système de navigation et la destination introduite puissent être envoyées par le mobile GSM (15) pour calculer un trajet dans une centrale (30).

3. Appareil de télématique pour un véhicule automobile selon la revendication 1 ou 2,
**caractérisé en ce qu'**
il comporte une mémoire (5a) dans laquelle est enregistré un trajet de destination calculé par la centrale (30) en tenant compte de la circulation actuelle et qui a été envoyé à l'appareil de télématique.

4. Appareil de télématique pour un véhicule automobile selon l'une des revendications précédentes,
**caractérisé en ce qu'**
il est réalisé pour sélectionner, à l'aide de la position obtenue du véhicule et de la direction de déplacement vers la destination introduite, les informations reçues par le module GSM (5) ou le module RDS (3a) concernant la situation actuelle de la circulation dans une certaine zone et d'émettre ces informations par un moyen optique et/ou acoustique.

5. Appareil de télématique pour un véhicule automobile selon l'une des revendications précédentes,
**caractérisé en ce qu'**
il est réalisé pour demander par le module GSM (5) à la centrale (30) des informations générales concernant par exemple des hôtels, des stations d'essence, des parkings, des banques ou autres.

6. Appareil de télématique pour un véhicule automobile selon l'une des revendications précédentes,
**caractérisé en ce qu'**
il comporte un lecteur de cassettes pour l'identification et est réalisé pour signaler, à l'aide du module GSM (5), toute utilisation non autorisée du véhicule vers la centrale (30).

7. Appareil de télématique pour un véhicule automobile selon la revendication 6,
**caractérisé en ce que**
partant de la position du véhicule, à un instant donné, et après dépassement d'une zone de déplacement prédéfinie, l'appareil télématique envoie un message à la centrale (30).

8. Appareil de télématique pour un véhicule automobile selon la revendication 6 ou 7,
**caractérisé en ce qu'**
il intervient dans la gestion du moteur (34) du véhicule.

9. Appareil de télématique pour un véhicule automobile selon l'une quelconque des revendications précédentes,
**caractérisé en ce qu'**
il comporte un appareil d'écriture/lecture pour une carte de propriété par exemple une carte à puce et il est réalisé pour qu'à la requête du conducteur, la centrale (30) recherche automatiquement toutes les taxes de garage qui doivent être payées par le titulaire de la carte de propriété ou comptabilise celles-ci.

10. Appareil de télématique pour un véhicule automobile selon l'une quelconque des revendications précédentes,
**caractérisé en ce qu'**
il comporte une mémoire pour une carte numérique et/ou un capteur de course.

11. Appareil de télématique pour un véhicule automobile selon l'une quelconque des revendications précédentes,
**caractérisé par**
un module DAB (22).

12. Appareil de télématique pour un véhicule automobile selon l'une quelconque des revendications précédentes,
**caractérisé par**
un module de navigation (23) qui peut être raccordé au bus CAN (20) ou à d'autres bus de données (21).

13. Appareil de télématique pour un véhicule automobile selon l'une quelconque des revendications précédentes,
**caractérisé en ce qu'**
au moins un haut-parleur (10) est de temps en temps utilisé comme micro.
